Europäisches Patentamt

European Patent Office

Office européen des brevets

(11) Publication number: **0 357 128**
**A1**

## (12) EUROPEAN PATENT APPLICATION

(21) Application number: **89202112.2**

(22) Date of filing: **18.08.89**

(51) Int. Cl.⁵: **C09D 7/00 , C09D 167/08**

(30) Priority: **18.08.88 US 233436**
**20.09.88 NL 8802321**

(43) Date of publication of application:
**07.03.90 Bulletin 90/10**

(84) Designated Contracting States:
**AT BE CH DE ES FR GB IT LI NL SE**

(71) Applicant: **STAMICARBON B.V.**
**Mijnweg 1**
**NL-6167 AC Geleen(NL)**

(72) Inventor: **Hofland, Adriaan**
**Chopinstraat 49**
**NL-8031 ZH Zwolle(NL)**

(54) **Reactive diluent for paint compositions.**

㊗ The invention relates to a reactive diluent for paint compositions comprising a fatty acid ester of a polyalcohol allyl ether and is characterized in that the diluent also comprises an oligomer with at least ten unsaturated fatty acid units.

The invention also relates to a resin composition comprising an alkyd resin and the aforementioned diluent.

EP 0 357 128 A1

## REACTIVE DILUENT FOR PAINT COMPOSITIONS

The invention relates to a reactive diluent for paint composiitons comprising a fatty acid ester of a polyalcohol allyl ether.

The use of a fatty acid ester of polyalcohol allyl ether as a reactive diluent in alkyd resins is described in EP-A-253474. In a composition containing alkyd resins, the diallylether of trimethylolpropane in particular, esterified with a polyunsaturated fatty acid such as tall oil fatty acid, produces a paint that dries well and has a high solids content.

However, the aforementioned paint composition presents the problem that the finishing layer obtained has insufficient scratch resistance and that, although good initial drying behaviour is obtained, the hardening or further drying behaviour is not satisfactory.

Moreover, the paint composition tends to sag after application at the processing viscosity.

The invention provides a solution for these problems.

The invention relates to a reactive diluent for paint compositions comprising a fatty acid ester of a polyalcohol allyl ether and is characterized in that the diluent also comprises an oligomer with at least ten unsaturated fatty acid units.

Preferably, the oligomer has between 12 and 20 fatty acid units, more in particular between 13 and 17 fatty acid units.

The molecular weight of the oligomer is preferably between 2000 and 8000, more in particular between 4000 and 6000.

Surprisingly, a mixture of a reactive diluent according to EP-A-253474 and the aforementioned oligomer has such a low viscosity, in spite of the relatively fairly high molecular weight of the oligomer, that the mixture can be used very well as a reactive diluent.

In addition, it has been found that the composition per se has good air-drying properties and can be used as binding agent without other resins. A binding agent based on the aforementioned mixture is particularly suitable in primers, in which, on account of its low viscosity, the binding agent can be combined with a large amount of fillers.

The fatty acid ester of a polyalcohol allyl ether is a compound with the formula:

$$R^1 - \overset{\overset{\textstyle O}{\textstyle \|}}{C} - O - R^2$$

in which:

$R^1$ is an alkyl radical with 10-24 carbon atoms and at least one non-terminal ethylenically unsaturated bond and

$R^2$ is an organic group comprising one or more allyl ether terminal groups.

$R^1$ is preferably an alkyl group with 16-20 carbon atoms, in particular with a $-CH = CH-CH_2-CH = CH-$ group, and $R^2$ is a bisallyl ether of a polyfunctional alcohol derivative.

As carboxylic acid with 10-24 carbon atoms and at least one non-terminal ethylenically unsaturated double bond, on the one hand, the ester comprises, for example, carboxylic acids or mixtures hereof with a straight or branched chain such as 3-decene carboxylic acid, 2-ethyl decene carboxylic acid, dodecene carboxylic acid, 4-ethyl dodecene carboxylic acid and fatty acids with 16-20 carbon atoms.

Preferably, fatty acids with 16-20 carbon atoms are used. Carboxylic acids with the following structural unit: $-CH = CH-CH_2-CH = CH-$ are very suitable because the diallylic hydrogen easily separates under the influence of oxygen and thus serves as polymerisation initiator.

As allyl ether-containing group, on the other hand, a group is preferably chosen with the formula:
$-X-[O-R^3]_n$
in which

n is a number from 1 to 5,

X is a polyol derivative with 2-20 carbon atoms and a functionality of at least $n + 1$ and

$R^3$ is an allyl derivative.

Preferably, n is a number between 2 and 4, because particularly good drying behaviour is obtained with compounds with 2 or more allyl groups.

As X use may be made of, for example, glycol, propanediol, butanediol, cyclohexanediol, 1,1,1-trimethylolpropane, glycerol, pentaerythritol, sorbitol and 1,2,3-butanetriol.

$R^3$ may be derived from, for example, a 1-alkene-3-ol such as 1-propene-3-ol, 1-butene-3-ol, 1-pentene-3-ol and 2-cyclohexene-1-ol, but also from alkoxylated 1-alkene-3-ols. Preferably, a 1-alkene-3-ol is used with fewer than 7, in particular fewer than 5 carbon atoms.

The ester can be prepared by, for example, esterifying an unsaturated fatty acid with an alcohol containing allyl groups such as trimethylolpropane diallyl ether, pentaerythritol diallyl ether, trimethylolpropane monoallyl ether, butanediol monoallyl ether and cyclohexanediol monoallyl ether.

The oligomer can be prepared by esterifying a multivalent acid, a polyalcohol and fatty acids.

Examples of the multivalent acids that can be chosen are benzenetetracarboxylic acid, trimellitic acid, naphthalenetetracarboxylic acid or a different acid with a functionality of preferably three or more. Optionally, an acid with a lower functionality may be used.

As polyalcohol an alcohol is preferably chosen with between 4 and 10, preferably between 6 and 10, free alcohol groups, for example pentaerythritol, dipentaerythritol and glucose.

The polyalcohol is used in approximately equimolar amounts with respect to the number of acid groups of the multivalent acid.

The fatty acid is used in the desired amount with respect to the multivalent acid plus the polyalcohol. In practice, this is about the number of moles, with respect to one mole of multivalent acid, that is desired to obtain the oligomer with more than ten unsaturated fatty acid chains.

Very suitable is, for instance, the esterification product of 1 mole of trimellitic acid anhydride, 3 moles of dipentaerythritol and 15 moles of soyabean fatty acid.

The ratio of fatty acid ester of polyalcohol allyl ether and oligomer is preferably between 10 : 90 and 90 : 10, in particular between 25 : 75 and 75 : 25, more in particular between 50 : 50 and 70 : 30.

From a process point of view it is very advantageous to prepare the ester and the oligomer simultaneously in one vessel.

A resin composition according to the invention comprises a polymer, preferably an alkyd resin, and a reactive diluent consisting of a mixture of oligomer and ester.

The weight ratio of the ester plus oligomer and the polymer may vary within wide limits. If a very low viscosity is desired, up to 80% ester plus oligomer may be used, but when combined with conventional solvents, or with a polymer or oligomer with a low melting point, 1% ester plus oligomer may already be advantageous. According to a preferred embodiment of the invention, the resin composition contains 20-99 wt.% polymer and 1-80 wt.% ester plus oligomer (the weights being based on the amounts of polymer + reactive diluent).

The resin composition preferably contains 40-90 wt.% polymer, and 10-60 wt.% ester plus oligomer, in particular 50-80 wt.% polymer and 20-50 wt.% ester plus oligomer.

The resin composition according to the invention may be used as such as a binding agent for, for example, paint. It is also possible to use non-reactive solvents. As such, for example, conventional solvents may be used, such as aromatic or aliphatic hydrocarbons with 6-25 C atoms. The amount of solvent is preferably less than 40 wt.%, more particularly less than 15 wt.% (with respect to the polymer plus reactive diluent). In practice, the amount of solvent will often be chosen on the basis of economic considerations (cost price). In the currently produced 'high solids' paints up to 15 - 20 % solvent may be used.

As polymer, the resin composition according to the invention may contain any polymer that can be cured by radical polymerisation. All air-drying polymers are particularly suitable, such as alkyd resin, (modified) condensation polymer and vinyl-addition polymer. Instead of the polymer, drying oil(s) may also be used.

According to a preferred embodiment of the invention, an alkyd resin is used as polymer. Alkyd resins are prepared by esterifying polyalcohols and multibasic acids or their anhydrides, usually also with fatty acids. Most alkyd resins are highly viscous; for practical use they are therefore marketed in solution. The properties are in the first place determined by the nature and the ratio of the alcohols and acids used and by the degree of condensation. Certain modifications in the composition, such as styrene and silicone alkyds, result in products with special properties. Alkyd resins obtained by esterification of a dibasic acid, usually phthalic acid, and a trivalent alcohol, usually glycerol, are thermosetting brittle resins that are soluble in alcohol at a low degree of condensation. The alkyd resins that are obtained by esterification of a bivalent alcohol, for instance glycol, and a dibasic acid such as phthalic acid, whether or not with the addition of non-setting fatty acid, are thermoplastic resins that dissolve in hydrocarbons and that are used mainly as softening agents. Alkyd resins can be grouped into fatty alkyds, with a fatty acid content of more than 60%, semi-fatty alkyds, with a fatty acid content of 45 - 60% and lean alkyds, with a fatty acid content of less than 45%. Their consistency varies from syrupy in the case of the fatty alkyd resins to brittle in the case of the lean alkyd resins. Alkyd resins are often used as binding agents in the paint industry: favourable properties are, for example, their high drying and hardening rate. Thanks to the great variety of types, the choice can be made to fit the purpose (so-called tailor-made): lean, fast-drying types are used in, for instance, spray paints for industrial use; fatter, but somewhat less quickly drying types are on the other hand very suitable for application by brush, that is, in house paints. Thus, each of the many types has its own field of application. It may be advantageous to prepare alkyds in the presence of 3-20 wt.%

monoalcohols with between 5 and 13 carbon atoms, such as hexanol, nonanol and decanol. Among other effects, this increases the solubility in alkanes. Alkanes are less harmful solvents than the solvents containing aromatics.

Alkyd resins are combined with, for example, carbamide and melamine resins in stoving enamels; together with cellulose nitrate (nitrocellulose) they produce the so-called combination paints. Modified alkyd resins are prepared by, for example, heating a bivalent acid or its anhydride with a multivalent alcohol and a fatty acid. In the fatty acid method dicarboxylic acid (anhydride), polyalcohol and fatty acid are heated to about 250¤C until the desired acid number and viscosity are obtained. In the monoglyceride method the fatty acids obtained in the esterification of a suitable oil are used for the modification with glycerol to monoglyceride. Then dicarboxylic acid (anhydride) is added and the mixture is treated in the same manner as in the fatty acid method. In the solvent method the reaction is carried out in the presence of a solvent which is immiscible with water. The polyalcohols used most are glycerol, pentaerythritol, trimethylolpropane and sorbitol. The principal polycarboxylic acids include phthalic acid (anhydride) and maleic acid; the fatty acids of linseed, ricinus, soyabean and coconut oil are often used as fatty acid. Ester, kopal and phenolic resins, styrene and silicones may be used as modifying agents.

As (modified) condensation polymers use may be made of, for example, (pre)polymers based on isocyanate groups, which may or may not be modified with acrylates or methacrylates, hydroxy-terminated polyethers or polyesters, which may or may not be modified with acrylates or methacrylates, epoxy resins, whether or not modified with acrylates or methacrylates, or polyesters based on epoxidized oils and acrylic or methacrylic acid.

As vinyl-addition polymer use may be made of, for example, vinyl polymers with an allylic function: $C = C-CH$ such as allyl (meth)acrylates or vinyl polymers with a drying oil functionality.

Instead of the polymer, linsead oil, soyabean oil, sunflower oil, safflower oil, tall oil and conjugated soyabean oil, or epoxidized drying oils may, for example, be used as drying oil.

The resin composition according to the invention may also be used as basic resin for alkyd dispersions.

The resin composition according to the invention can be easily prepared by mixing the reactive diluent with the polymer.

The resin composition according to the invention may contain the usual additives such as siccatives, pigments and stabilizers.

The resin compositions according to the invention may be used as bases for paint compositions in wall paints and wood paints, etc.

The resin compositions according to the invention present a negligible emission of solvents if the reactive diluent according to the invention is the only solvent used and, in addition to the low solvent emission, they also have good coating properties such as good hardening behaviour, solvent resistance, resistance to scrubbing, chemical resistance, flexibility, gloss and scratch resistance.

With the resin composition according to the invention paint compositions can be produced that contain up to 15% solvent (high-solid) and have very good processing and coating properties.

The invention will be futher elucidated with the aid of the following examples, without, however, being limited thereto.

Examples

Preparation of the ester

A 3-litre, 4-necked flask equipped with a stirrer, nitrogen gas inlet, thermometer and a 'Dean and Stark' apparatus connected to a cooler was filled with 1124 g (5.25 mol) of trimethylolpropane diallyl ether and 1410 g (5.00 mol) of soyabean fatty acids. After 60 g of xylene had been added for the azeotropic removal of water, the mixture was heated to 245-250¤C (under a nitrogen blanket). The esterification was completed in 6 hours, after which 90 ml of water had been removed by distillation. The residual xylene and excess trimethylolpropane diallyl ether were removed while the flask was allowed to cool in a vacuum.

The product obtained had the following properties:

acid number : 5.2

colour : 1 (Gardner)

viscosity : 0.2 d Pa.s (Emila rotoviscometer at 23¤C).

Example I

Paint composition I

A paint was prepared with the following binding agent composition:
20 wt.% of the aforementioned ester
60 wt.% of an alkyd resin based on tall oil fatty acid, pentaerythritol and isophthalic acid. The resin had an acid number of 8 mg of KOH/g and a viscosity of 800 dPa.s at 23ºC.
20 wt.% of an oligomer prepared by esterification, in a manner known in the art, of 1 mole of trimellitic acid anhydride, 3 moles of dipentaerythritol and 15 moles of tall oil fatty acid. The paint was diluted to a vicosity of 5 dPa.s at 20ºC before application. The solids content was 85%. The drying properties are given in Table 1.

Comparative experiment A

Paint composition A

A paint was prepared with the following binding agent composition:
40 wt.% of the aforementioned ester
60 wt.% of the aforementioned alkyd resin.
The paint was diluted to a viscosity of 5 dPa.s at 20ºC before application. The solids content was 91%. The drying properties are given in Table 1.

TABLE 1

| Experiment | A | I |
|---|---|---|
| Sand drying time (hrs) 76 nm film | 8 | 5.5 |
| After-tack after 24 hours (1 = poor; 5 = good) | 1 | 3 |
| König hardness (sec) after 14 days, 100 $\mu$m film | 17 | 21 |

The above data show that the drying behaviour of the paint clearly improves when an ester and an oligomer are used in the paint composition. In addition, paint composition A appeared to sag when applied to vertical plates.

**Claims**

1. Reactive diluent for paint compositions comprising a fatty acid ester of a polyalcohol allyl ether, characterized in that the diluent also comprises an oligomer with at least ten unsaturated fatty acid units.

2. Reactive diluent according to claim 1, characterized in that the oligomer has between 12 and 20 fatty acid units.

3. Reactive diluent according to claim 1 or 2, characterized in that the oligomer has a molecular weight of between 4000 and 6000.

4. Reactive diluent according to any one of claims 1-3, characterized in that the ester : oligomer weight ratio is between 25 : 75 and 75 : 25.

5. Resin composition comprising
20-80 parts by weight alkyd resin
10-50 parts by weight reactive diluent according to any one of claims 1-4
0-40 parts by weight non-reactive diluent.

6. Coating compisition comprising a diluent according to any one of claims 1-4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 253 474 (COATES BROTHERS PLC) * Claims 1-3 * | 1 | C 09 D 7/00 C 09 D 167/08 |
| A | NL-A-6 914 213 (KAO SOAP CO.) * Claims 1-7 * | 1 | |

TECHNICAL FIELDS SEARCHED (Int. Cl.5)

C 09 D

The present search report has been drawn up for all claims

| Place of search | Date of completion of the search | Examiner |
|---|---|---|
| THE HAGUE | 22-11-1989 | DECOCKER L. |